# EUROPÄISCHE PATENTANMELDUNG

(11) **EP 1 168 857 A1**
(43) Veröffentlichungstag der Anmeldung: **02.01.2002**
(21) Anmeldenummer: 00113264.6
(22) Anmeldetag: 21.06.2000
(51) Int. Cl.: H04Q 3/00, H04Q 7/24

(54) **Anordnung zum Mobilitätsmanagement in einem Telekommunikationsnetz**

(71) Anmelder: SIEMENS AKTIENGESELLSCHAFT, 80333 München (DE)
(72) Erfinder: Becker, Helmut, 83043 Bad Aibling (DE); Dillis, Jan, 2506 Liez (BE); Galensa, Klaus, Boca Raton, FL 33431 (US); Rückstuhl, Hanspeter, 82515 Wolframshausen (DE)

(57) **Zusammenfassung**

Die Erfindung betrifft eine Anordnung zum Mobilitätsmanagement in einem Telekommunikationsnetz, wobei ein Dienststeuerungspunkt mindestens einen Sub-Dienststeuerungspunkt für Mobilitätsmanagement und mindestens einem ersten Sub-Dienststeuerungspunkt für Dienstlogik aufweist. Erfindungsgemäß sind mindestens ein Server für Mobilitätsmanagement vorgesehen, der dazu ausgebildet ist, Mobilitätsmanagementfunktionen auszuführen und hierzu mit dem oder den ersten Sub-Dienststeuerungspunkt(en) für Mobilitätsmanagement zu kommunizieren.

## Beschreibung

Anordnung zum Mobilitätsmanagement in einem Telekommunikationsnetz

Die Erfindung betrifft eine Anordnung zum Mobilitätsmanagement in einem Telekommunikationsnetz gemäß Patentanspruch 1 und ein Verfahren zum Mobilitätsmanagement in einem Telekommunikationsnetz gemäß Patentanspruch 9.

Mit Endgeräte-Mobilität wird die Fähigkeit eines mobilen Endgerätes bezeichnet, von beliebigen Standorten des Terminals auf Telekommunikationsdienste innerhalb einer definierten Zone zuzugreifen. Unter diesen Begriff fällt auch die Fähigkeit eines Telekommunikationsnetzes, mobile Engeräte zu identifizieren und lokalisieren, wenn sich diese innerhalb der definierten Zone bewegen.

In Telekommunikationsnetzen wie PSTN (Public Switched Telephone Network) oder ISDN (Integrated Services Digital Network), sogenannten Festnetzen, ist die Mobilität des Endgerätes eines Teilnehmers auf einen kleinen Bereich beschränkt, der von einer einzelnen Funkbasisstation oder einem Zugangsnetz, wenn dieses eine Endgerät-Mobilität ermöglicht, abgedeckt wird. In Festnetzen haben daher mobile Engeräte, beispielsweise Schnurlostelefone, keinen Zugriff auf Festnetzdienste von beliebigen Standorten außer dem von ihrer Basisstation oder ihrem Zugangsnetz abgedeckten Bereichen. Zudem kann ein Festnetz ein mobiles Engerät nicht lokalisieren, identifizieren oder authentifizieren, wenn das Endgerät zwischen verschiedenen Basisstationen bzw. Zugangsnetzen wechselt.

In Mobilfunknetzen (Public Land Mobile Networks = PLMN), die auf dem ETSI-Standard für GSM (Global System for Mobile Communications) oder dem Interim's Standard 41 des nordamerikanischen Verbandes der Telekommunikationsindustrie (TIA IS-41) basieren, sind für das Mobilitätsmanagement spezielle Datenbanken vorgesehen, die als Heimatdatei oder Home-Location-Register (HLR) und als Besucherdatei oder Visitor-Location-Register (VLR) bezeichnet werden. Jedes Mobilfunknetz weist mehrere HLR auf, von denen jedes zur Wartung bzw. Speicherung einer Reihe von Aufzeichnungen einer Gruppe von Mobilfunkteilnehmern vorgesehen ist. Das HLR wartet die Informationen über die Subskription, Dienstprofile und Standort. Die Standortinformationen enthalten beispielsweise die Adresse des letzten VLR, welches einem HLR Registrierinformation bezüglich eines Mobilfunkteilnehmers übermittelt hat.

Der Dienstebereich eines Mobilfunknetzes ist in eine Vielzahl von Standortbereichen aufgeteilt. Mehrere Standortbereiche sind einem VLR zugewiesen. Üblicherweise ist das VLR Teil einer Mobilvermittlungsstelle. Ein VLR verrichtet zwei Funktionen: es unterstützt das Lokalisieren eines mobilen Endgerätes zur Rufzustellung und fungiert als lokale, temporäre Datenbank für Teilnehmerinformationen, von denen die meisten von einem HLR beim Übertragen von Dienstprofilen während eines Registrierungsvorganges erhalten werden. Die lokale Verfügbarkeit von Teilnehmerinformationen und -profilen verringert den Datenverkehr über die Signalisierungsnetze und verkürzt die Zeiten zur Absetzung eines Rufes.

Wenn ein mobiles Engerät in einen bestimmten Standortbereich gelangt, werden die Identität des Mobilfunkteilnehmers und der Standortbereich zusammen mit dem Dienstprofil des Mobilfunkteilnehmers in dem zugehörigen VLR gespeichert. Zur gleichen Zeit informiert das VLR das HLR des Mobilfunkteilnehmers über den neuen Standort des Teilnehmers. Das VLR ruft auch das Dienstprofil und die Authentifizierungsdaten vom HLR ab. Das HLR veranlaßt dann das vor dem aktuellen VLR besuchte VLR zum Löschen des Teilnehmereintrags.

Um einen eingehenden Ruf weiterzuleiten, fragt eine zentrale Vermittlungsstelle (die Vermittlungsstelle für das Mobilfunknetz) beim HLR an. Das HLR wiederum fordert vom VLR eine Durchleitungsnummer (Roaming-Nummer) an. Das VLR weist dann temporär dem Teilnehmer die Roaming-Nummer zu. Mittels der Roaming-Nummer wird der Ruf zu der gerade besuchten Vermittlungsstelle geleitet, wo die Identität des Mobilfunkteilnehmers und die aktuelle Standortidentität vom VLR abgerufen werden. Ausgehend von diesen Informationen wird ein Paging des mobilen Engerätes durchgeführt. Wenn das mobile Engerät auf die Paging-Anfrage antwortet, kann eine Verbindung aufgebaut werden.

Das VLR und HLR, sowie die Mobilvermittlungsstelle und das HLR kommunizieren durch Austauschen von Signalisierungsnachrichten. Das eingesetzte Signalisierungsprotokoll wird als Mobile-Application-Protokoll (MAP) bezeichnet und nutzt die Dienste des Zentralkanal-Zeichengabesystems 7 (Signalling System #7) Transaction Capability Application Part (TCAP). Die Schnittstelle zwischen der Basisstation und der Mobilvermittlungsstelle wird als A-Schnittstelle bezeichnet. Diese Schnittstelle unterscheidet sich von den in Festnetzen wie dem PSTN oder ISDN eingesetzten Schnittstellen.

Standardisierungsgremien arbeiten bereits an verschiedenen Lösungen für eine Terminalmobilität in Festnetzen. In Japan ermöglicht beispielsweise das Personal-Handy-Phone-System (PHS) Telekommunikationsnetzweite Mobilität durch ein PHS-Dienststeuerungscenter (eine zentrale Datenbank), die Basisstationen steuert und den Standort mobiler Endgeräte überwacht. Das nordamerikanische Personal-Access-Communications-System (PACS) basiert auf dem Wireless-Access-Communications-System (WACS) der Firma Bellcore und auf PHS. PACS nutzt GSM-ähnliche VLR- und HLR-Knoten, um netzweite Mobilität zu unterstützen.

Auf intelligenten Netzen (IN) basierende Lösungen, wie die für Future-Public-Land-Mobile-Network-Telecom-Services (FPLMNTS), Universal-Mobile-Telecom-Sevices (UMTS) und Cordless-Terminal-Mobility (CTM) diskutierten, zielen auf die Integration von Mobilitätsmanagement-Funktionen auf einer Dienststeuerungspunkt-Plattform (Service-Control-Point-Platform) ab.

Hierzu ist eine Funktionsaufteilung in Funktionen für das Mobilitätsmanagement, die von einem Sub-Dienststeuerungspunkt für Mobility-Management (SCPmm: Service Control Point for mobility management) ausgeführt werden, und für die Dienststeuerung, die von einem Sub-Dienststeuerungspunkt für Dienstlogik (SCPsl: Service Control Point for service logic) ausgeführt werden, vorgesehen. Hierbei handelt es sich um funktionell relativ selbstständige Komponenten eines übergeordneten Dienststeuerungspunktes oder -knotens (SCP).

Wie bei einem VLR im GSM sollen Dienststeuerungsfunktionen für Mobilitätsmanagement (SCFmm: Service Control Function for mobility management) und Dienstdatenfunktionen für Mobilitätsmanagement (SDFmm: Service Data Functions for mobility management) das Mobilitätsmanagement aller Teilnehmer durchführen, die sich gerade in dem von einer bestimmten Einheit abgedeckten Bereich aufhalten. Hierzu besitzen die Teilnehmer eine in den Dienstdatenfunktionen für Mobilitätsmanagement reservierte temporäre Mobilitätsdatenbank.

Zur Standardisierung vorgeschlagene Dienststeuerungs- und Dienstdatenfunktionen für Dienstlogik (SCFsl, SDFsl: Service Control/Data Function for service logic) beinhalten eine Dienstlogik und permanente Teilnehmerprofile, um jeden IN-Dienst wie für Festnetzteilnehmer zu verarbeiten, müssen aber zusätzlich Software zur Verarbeitung rufunabhängiger Standortregistrierungs- und Authentifizierungsprozeduren für Mobilitätsmanagement sowie einen Permanentdatenbankspeicher für auf das Mobilitätsmanagement bezogene Daten beinhalten.

Zudem weisen diese Standardisierungsvorschläge einige Unterschiede zur GSM-Telekommunikationsnetz-Architektur und den GSM-Telekommunikationsnetz-Prozeduren auf. Da diese zusätzlichen Dienste als IN-Dienste implementiert werden, wird die gesamte Dienststeuerung im Sub-Dienststeuerungspunkt für Dienstlogik konzentriert, so dass kein Laden von Daten bezüglich eines Dienstes in die Dienstdatenfunktionen für Mobilitätsmanagement erforderlich ist. Andererseits bedeutet dies, dass die Dienststeuerungsfunktionen für Dienstlogik auch in die IN-Dienststeuerung während der Verarbeitung eines ausgehenden Rufes einbezogen werden müssen.

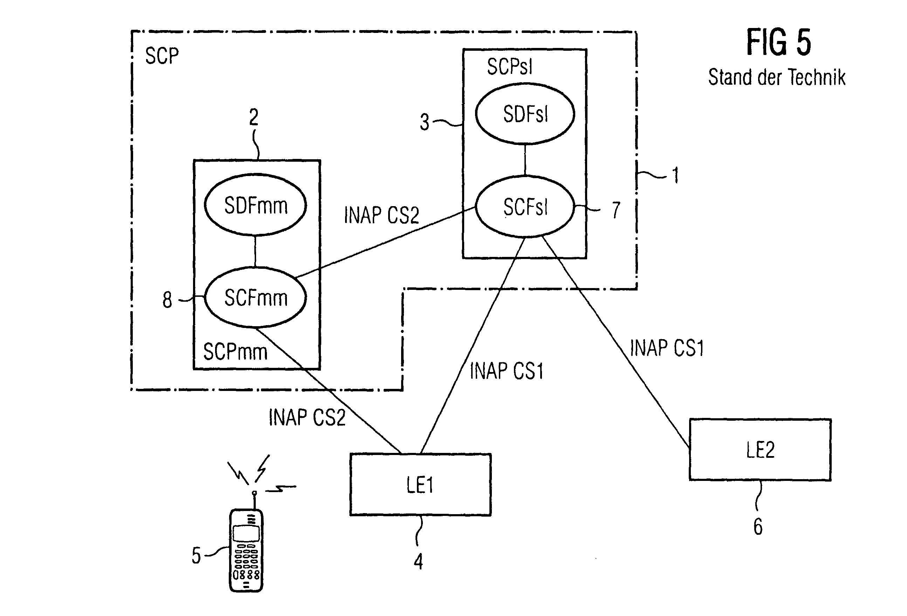

In Fig. 5 ist ein Dienststeuerungspunkt 1 (SCP) eines intelligenten Netzes (IN) mit der vorgesehenen Funktionsaufteilung in einen Sub-Dienststeuerungspunkt 2 für Mobilitätsmanagement (SCPmm) und einen Sub-Dienststeuerungspunkt 3 für Dienstlogik (SCPsl) dargestellt. Eine erste, mit dem Dienststeuerungspunkt 1 verbundene Vermittlungsstelle 4 (LE1) wird von Funktionen für das Mobilitätsmanagement, die von dem Sub-Dienststeuerungspunkt 2 für Mobilitätsmanagement ausgeführt werden, und von Funktionen für die Dienstlogik, die von dem Sub-Dienststeuerungspunkt 3 für die Dienstlogik ausgeführt werden, unterstützt.

Ein Ruf kann nun an ein mobiles Engerät 5, das sich im Bereich der ersten Vermittlungsstelle 4 aufhält, von einer zweiten Vermittlungsstelle 6 (LE2) über den Sub-Dienststeuerungspunkt 3 für Dienstlogik mittels Dienststeuerungsfunktionen 7 für Dienstlogik (SCFsl) geleitet werden. Die Dienststeuerungsfunktionen 7 für Dienstlogik übermitteln Daten in einem Protokoll gemäß INAP-CS2 (Intelligent Network Application Protocoll Capability Set 2) an Dienststeuerungsfunktionen für Mobilitätsmanagement 8 (SCFmm), die wiederum mittels INAP-CS2 Daten mit der ersten Vermittlungsstelle 4 austauschen und das Mobilitätsmanagement ausführen. Die Übertragung von Daten zwischen der ersten und zweiten Vermittlungsstelle 4 bzw. 6 und den Dienststeuerungsfunktionen 7 für Dienstlogik erfolgt in einem Protokoll gemäß INAP-CS1 (Intelligent Network Application Protocoll Capability Set 1). Allerdings ist der Sub-Dienststeuerungspunkt 3 für Dienstlogik wesentlich an der Rufvermittlung und am Rufaufbau beteiligt und daher gerade durch das Mobilitätsmangement erheblich belastet. Zudem muß der Sub-Dienststeuerungspunkt 3 für Dienstlogik speziell für das Mobilitätsmangement angepaßt werden, was einen erheblichen Entwicklungsaufwand bedingt.

Aufgabe der vorliegenden Erfindung ist es, eine Anordnung und ein Verfahren zum Mobilitätsmanagement in einem Telekommunikationsnetz vorzuschlagen, welche(s) die Mobilität in Festnetzen wie PSTN oder ISDN ähnlich wie in Mobilfunknetzen ermöglicht und im wesentlichen unabhängig von Dienststeuerungsfunktionen ist, die von einem Sub-Dienststeuerungspunkt für Dienstlogik ausgeführt werden. Ferner sollen bereits vorhandene Funktionen zur Dienststeuerung gemäß Mobilfunkstandards (wie GSM) nutzbar sein.

Diese Aufgabe wird durch eine Anordnung mit den Merkmalen von Patentanspruch 1 und durch ein Verfahren mit den Merkmalen von Patentanspruch 9 gelöst. Bevorzugte Ausführungsformen sind Gegenstand der abhängigen Patentansprüche.

Ein wesentlicher Punkt der erfindungsgemäßen Anordnung ist der Einsatz mindestens eines Servers für Mobilitätsmanagement (HMS: Home Mobility Server), der Mobilitätsmanagementfunktionen ausführt, und mindestens eines zusätzlichen Sub-Dienststeuerungspunktes für Dienstlogik (HSCPsl: Home Service Control Point for service logic), die hierzu mit einem oder mehreren ersten Sub-Dienststeuerungspunkt(en) für Mobilitätsmanagement kommunizieren. Dadurch, daß der Server für Mobilitätsmanagement insbesondere die dem ersten Sub-Dienststeuerungspunkt für Dienstlogik zugedachten Funktionen für das Mobilitätsmanagement übernimmt, wird vorteilhafterweise der letztere und der (zweite) Sub-Dienststeuerungspunkt für Dienstlogik insbesondere von Aufgaben des Mobilitätsmanagements entlastet.

Zudem ist es möglich, zentrale Funktionen für die Mobilität in einer eigenen Plattform zu realisieren, ohne den oder die ersten Sub-Dienststeuerungspunkt(e) für Dienstlogik wesentlich zu verändern. Vorzugsweise weist hierzu der Server für Mobilitätsmanagement Mobilitätsfunktionen auf, die in einer Plattform realisiert werden, die im wesentlichen von dem ersten Sub-Dienststeuerungspunkt für Dienstlogik unabhängig ist.

Vorteilhafterweise können für den oder die Server für Mobilitätsmanagement eine oder mehrere Funktion(en) von Mobilfunkstandards, insbesondere einer GSM-Home-Location-Register/Authentication-Center-Plattform, verwendet werden, die für die GSM-Dienststeuerung vorgesehen sind. Durch diese "Wiederverwendung" bereits implementierter Funktionen kann die erwähnte Plattform ohne großen Aufwand erstellt werden. Ferner kann auf bereits vorhandene Funktionen aus GSM zurückgegriffen werden, die bereits getestet sind und sich im Dauerbetrieb bewährt haben.

Der oder die Server für Mobilitätsmanagement stellt bzw. stellen mindestens eine der folgenden Funktionalitäten in einem IN-basierten Telekommunikationsnetz (IN) zur Verfügung: Prozeduren zum Laden von Netz-Zugangsdaten in ein mobiles Endgerät über die Luftschnittstelle; Daten zur Chiffrierung einer Übertragung über die Luftschnittstelle zwischen einem mobilen Engerät und einer Basisstation; Prozeduren und Daten zur Identifizierung, Authentifizierung und Standortregistrierung eines mobilen Engerätes; für jeden Teilnehmer im Telekommunikationsnetz Wartung der Adresse von Dienststeuerungsfunktionen für das Mobilitätsmanagement, die aktuell die Teilnehmer bedienen.

Vorzugsweise tauschen der oder die Server für Mobilitätsmanagement und der oder die zweite(n) Sub-Dienststeuerungspunkt(e) für Dienstlogik Daten im Mobile-Application-Protokoll (MAP) aus. MAP nutzt vorteilhafterweise den gleichen Protokoll-Stapel wie das in intelligenten Netzen eingesetzte Intelligent-Network-Application-Protokoll (INAP).

In einer weiteren bevorzugten Ausgestaltung der Anordnung ist in einer lokalen Vermittlungsstelle, die dem von einem mobilen Engerät besuchten Bereich zugeordnet ist, mindestens ein Detektierungspunkt vorgesehen, welcher der Vermittlungsstelle ein Handover der Dienststeuerung an eine in einen zweiten Sub-Dienststeuerungspunkt für Dienstlogik enthaltene Funktion ermöglicht.

Der Detektierungspunkt wird hierzu bevorzugt dynamisch in der Vermittlungsstelle dem mobilen Engerät zugeordnet.

Weitere Vorteile und Anwendungsmöglichkeiten der Erfindung ergeben sich aus der nachfolgenden Beschreibung von Ausführungsbeispielen in Verbindung mit den Zeichnungen. Hierbei zeigt:
Fig. 1 ein erstes Ausführungsbeispiel des Aufbaus eines Dienststeuerungspunktes;
Fig. 2 ein zweites Ausführungsbeispiel des Aufbaus eines Dienststeuerungspunktes;
Fig. 3 den Ablauf bei der Anmeldung und Registrierung eines mobilen Engerätes in einem intelligenten Netz;
Fig. 4 den Ablauf bei einem für ein mobiles Engerät eingehenden Ruf, wobei das mobile Engerät in einem intelligenten Netz angemeldet ist; und
Fig. 5 den Aufbau eines Dienststeuerungspunktes in einem intelligenten Netz, das ein Mobilitätsmanagement ausführen kann, gemäß dem Stand der Technik.

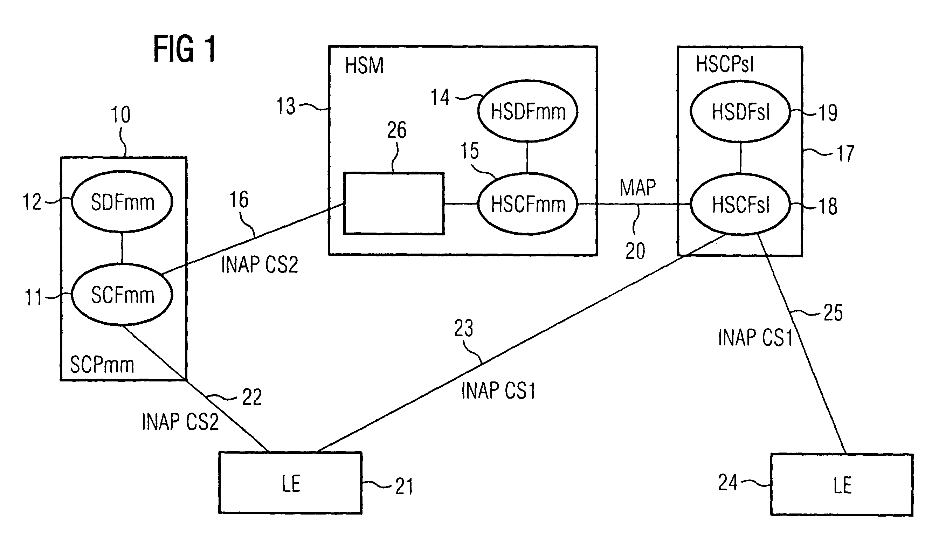

In Fig. 1 sind in starker Vereinfachung nur drei, für die erfindungsgemäße Anordnung wesentliche Bestandteile eines Dienststeuerungspunktes dargestellt:
- ein Sub-Dienststeuerungspunkt 10 für Mobilitätsmanagement, der wiederum Dienststeuerungsfunktionen 11 für Mobilitätsmanagement und Dienstdatenfunktionen 12 für Mobilitätsmanagement umfaßt;
- ein Server 13 für Mobilitätsmanagement, der ebenfalls Dienststeuerungsfunktionen 15 für Mobilitätsmanagement und Dienstdatenfunktionen 14 für Mobilitätsmanagement umfaßt, wobei Dienststeuerungsfunktionen 11 für Mobilitätsmanagement des Sub-Dienststeuerungspunktes 10 für Mobilitätsmanagement mit den Dienststeuerungsfunktionen 15 für Mobilitätsmanagement des Servers 13 für Mobilitätsmanagement über eine Verbindung 16 Daten in einem Protokoll gemäß INAP-CS2 austauschen können;
- einen zweiten Sub-Dienststeuerungspunkt 17 für Dienstlogik, der Dienststeuerungsfunktionen 18 für Dienstlogik und eine Dienstdatenfunktionen 19 für Dienstlogik umfaßt, wobei die Dienststeuerungsfunktionen 18 für Dienstlogik mit den Dienststeuerungsfunktionen 15 für Mobilitätsmanagement des Servers 13 für Mobilitätsmanagement über eine Verbindung 20 Daten in einem Protokoll gemäß MAP austauschen können.

Der Datenaustausch in INAP-CS2 über die Verbindung 16 ist nur möglich, wenn die Dienststeuerungsfunktionen 11 für Mobilitätsmanagement des Sub-Dienststeuerungspunktes 10 einer standardisierten Telekommunikationsnetzarchitektur wie CTM entsprechen. In einem solchen Fall kann ein Protokoll wie INAP mit Mobilitätsmanagement-Funktionalitäten eingesetzt werden. Im Server 13 für Mobilitätsmanagement ist hierzu eine Protokoll-Anpasseinrichtung 26 (IWU: Interworking Unit) vorgesehen, die Daten sowohl in INAP als auch in MAP verarbeiten kann. Dies ist beispielsweise dann erforderlich, wenn die im Server 13 für Mobilitätsmanagement verwendeten Funktionen GSM-Funktionen aufweisen.

Nicht dargestellt ist der erste Sub-Dienststeuerungspunkt für Dienstlogik, der durch die erfindungsgemäße Anordnung von Funktionen für das Mobilitätsmanagement im wesentlichen befreit wird.

Eine erste Vermittlungsstelle 21 ist über eine erste Verbindung 22 mit dem Sub-Dienststeuerungspunkt 10 für Mobilitätsmanagement verbunden und kann mit den Dienststeuerungsfunktionen 11 für Mobilitätsmanagement Daten in einem Protokoll gemäß INAP-CS2 austauschen. Ferner kann die erste Vermittlungsstelle 21 über eine zweite Verbindung 23 mit dem zweiten Sub-Dienststeuerungspunkt 17 für Dienstlogik Daten in einem Protokoll gemäß INAP-CS1 austauschen.

Eine zweite Vermittlungsstelle 24 ist über eine dritte Verbindung 25 ebenfalls mit dem zweiten Sub-Dienststeuerungspunkt 17 für Dienstlogik verbunden und kann mit den Dienststeuerungsfunktionen 18 für Dienstlogik Daten in einem Protokoll gemäß INAP-CS1 austauschen.

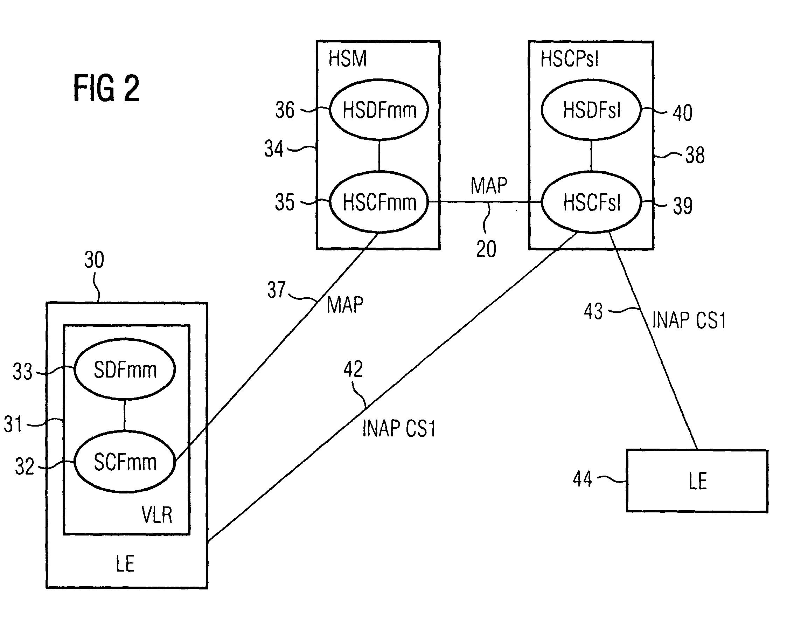

Fig. 2 stellt eine etwas andere Implementierung eines Dienststeuerungspunktes für die erfindungsgemäße Anordnung dar.

In einer ersten Vermittlungsstelle 30 sind als Sub-Dienststeuerungspunkt 31 für Mobilitätsmanagement zumindest teilweise GSM-Funktionen zur Steuerung und Verwaltung einer Besucherdatei VLR implementiert, und zwar als Dienststeuerungsfunktionen 32 für Mobilitätsmanagement und Dienstdatenfunktionen 33 für Mobilitätsmanagement. Die Funktion einer GSM-Heimatdatei HLR übernimmt ein Server 34 für Mobilitätsmanagement, der hierzu Dienststeuerungsfunktionen 35 für Mobilitätsmanagement und Dienstdatenfunktionen 36 für Mobilitätsmanagement umfaßt. Die Dienststeuerungsfunktionen 35 für Mobilitätsmanagement des Servers 34 für Mobilitätsmangement können Daten mit den Dienststeuerungsfunktionen 32 für Mobilitätsmanagement des Sub-Dienststeuerungspunktes 31 für Mobilitätsmanagement über eine erste Verbindung 37 nur gemäß MAP austauschen, da die Funktionen des Sub-Dienststeuerungspunktes 31 für Mobilitätsmanagement GSM-Funktionen aufweisen. Hierzu müssen die Funktionen des Servers 34 für Mobilitätsmanagement MAP-kompatibel sein.

Ein Sub-Dienststeuerungspunkt 38 für Dienstlogik umfaßt Dienststeuerungsfunktionen 39 für Dienstlogik und Dienstdatenfunktionen 40 für Dienstlogik. Die Dienststeuerungsfunktionen 39 für Dienstlogik können über eine zweite Verbindung 41 Daten gemäß MAP mit den Dienststeuerungsfunktionen 35 für Mobilitätsmanagement des Servers 34 für Mobilitätsmanagement austauschen. Ferner können die Dienststeuerungsfunktionen 39 für Dienstlogik noch über eine dritte Verbindung 42 und eine vierte Verbindung 43 mit der ersten Vermittlungsstelle 30 bzw. einer zweiten Vermittlungsstelle 44 Daten in einem Protokoll gemäß INAP-CS1, also dem für intelligente Netze standardisierten Protokoll, austauschen.

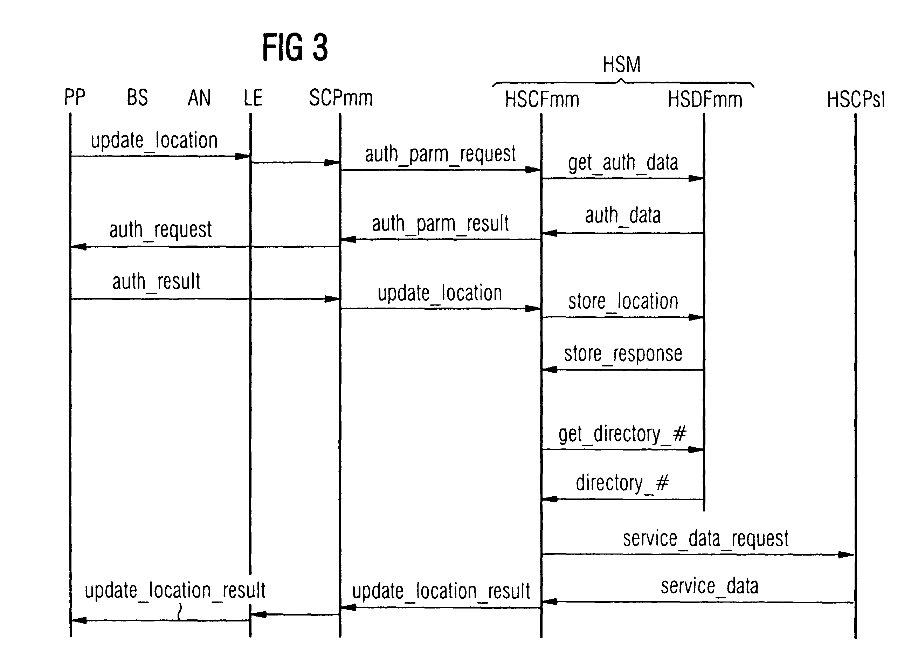

Anhand von Fig. 3 wird der Daten- und Informationsfluß bei der Registrierung bzw. Einbuchung eines mobilen Engerätes PP erläutert.

Wenn ein mobiles Engerät PP in den Bereich einer Basisstation BS gelangt, die direkt oder über ein Zugangsnetz AN mit der für den Bereich zuständigen lokalen Vermittlungsstelle LE verbunden ist, identifiziert es sich bei der Basisstation BS oder dem Zugangsnetz AN durch Senden von Identifikationsdaten.

Hat das mobile Engerät PP Zugangsrechte, ist aber noch nicht registriert, initiiert die Basisstation BS bzw. das Zugangsnetz AN eine Prozedur zur Standortregistrierung, indem eine bestimmte Mobilitätsmanagement-Prozedur *update_location* in der erwähnten Vermittlungsstelle LE aufgerufen wird, zusammen mit der Identität IPUI des mobilen Engerätes des Teilnehmers. Die Vermittlungsstelle LE leitet den Aufruf an integrierte oder externe Dienststeuerungsfunktionen für Mobilitätsmanagement eines Sub-Dienststeuerungspunktes für Mobilitätsmanagement SCPmm in einem intelligenten Netz weiter.

Optional können die Dienststeuerungsfunktionen nun zuerst eine Authentifizierungsprozedur für das mobile Engerät PP starten.

Hierzu rufen die Dienststeuerungsfunktionen eine Prozedur *auth_parm_request* von Dienststeuerungsfunktionen für Mobilitätsmanagement HSCFmm eines Servers für Mobilitätsmanagement HSM zusammen mit der IPUI auf. Die Adresse des Servers für Mobilitätsmanagement HSM kann aus der IPUI abgeleitet werden.

Dieser Aufruf wird durch die Dienststeuerungsfunktionen für Mobilitätsmanagement HSCFmm des Servers behandelt, welche wiederum eine Prozedur *get_auth_data* der Dienstdatenfunktionen für Mobilitätsmanagement HSDFmm aufrufen, um Authentifizierungsdaten für den Teilnehmer zu berechnen und zurückzusenden, wobei die Authentifizierungsdaten auf geheimen Daten bezüglich des Teilnehmers basieren, die in den Dienstdatenfunktionen für Mobilitätsmanagement HSDFmm gespeichert sind.

Die Authentifizierungsdaten werden dann über die Prozedur *auth_data* an die Dienststeuerungsfunktionen für Mobilitätsmanagement HSCFmm zurückgegeben, die diese wiederum mittels der Prozedur *auth_parm_result* an den Sub-Dienststeuerungspunkt für Mobilmangement SCPmm übermitteln. Der Sub-Dienststeuerungspunkt SCPmm übergibt dann die Authentifizierungs-Anforderungsdaten an das mobile Engerät PP durch die Prozedur *auth_request.*

Das mobile Engerät PP benutzt die Anfrage, um ein Authentifizierungsergebnis zu berechnen, das an den Sub-Dienststeuerungspunkt für Mobilitätsmanagement SCPmm durch eine Prozedur *auth_result* zurückgegeben wird.

Wenn die Authentifizierung erfolgreich ist, ruft der Sub-Dienststeuerungspunkt für Mobilitätsmanagement SCPmm eine Prozedur *update_location* zusammen mit der IPUI sowie der Adresse der Dienststeuerungsfunktionen für Mobilitätsmanagement in dem Server für Mobilitätsmanagement HMS auf. Die Dienststeuerungsfunktionen für Mobilitätsmanagement HSCFmm rufen dann die Dienstdatenfunktionen für Mobilitätsmanagement HSDFmm über die Prozedur *store_location* auf, um die Adresse der Dienststeuerungsfunktionen für Mobilitätsmanagement SCPmm in einer Mobilteilnehmer-Datenbank zu speichern und eine Teilnehmer-Eintragsnummer vorzusehen (Prozeduren *store_response, get_directory_#, directory_#*).

Optional können die Dienststeuerungsfunktionen für Mobilitätsmanagement HSCFmm auch mittels eines Prozeduraufrufes *service_data_request* zusammen mit der IPUI die Dienststeuerungsfunktionen für Dienstlogik eines Sub-Dienststeuerungspunktes für Dienstlogik HSCPsl aufrufen. Die Adresse der Dienststeuerungsfunktionen für Dienstlogik kann aus der IPUI abgeleitet werden. Die Dienststeuerungsfunktionen für Dienstlogik übermitteln dann über die Prozedur *service_data* Daten bezüglich eines Trigger-Erkennungspunkts an die Dienststeuerungsfunktionen für Mobilitätsmanagement HSCFmm.

Die Dienststeuerungsfunktionen für Mobilitätsmanagement HSCFmm rufen im Sub-Dienststeuerungspunkt für Mobilitätsmanagement SCPmm wiederum eine Prozedur *update_location_result* auf, welche die Teilnehmereintragsnummer und optionale Daten bezüglich des Erkennungspunkts umfaßt. Dieser Prozeduraufruf wird an die Vermittlungsstelle LE weitergeleitet.

Die Daten bezüglich des Erkennungspunkts, die in dem Prozeduraufruf enthalten sind, werden in einer Zugangsdatenbank der Vermittlungsstelle LE gespeichert; die Eintragsnummer und die Adresse der Basisstation BS bzw. des Zugangsnetzs AN werden in den Dienststeuerungsfunktionen für Mobilitätsmanagement SCPmm gespeichert.

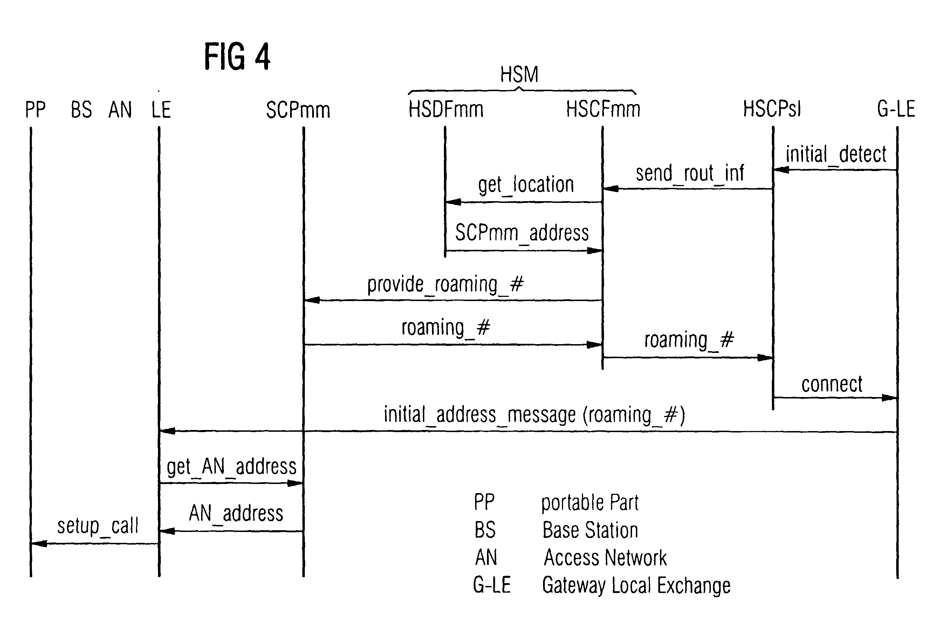

Anhand von Fig. 4 wird der Nachrichten- und Datenfluß bei einem für ein mobiles Engerät eingehenden Ruf erläutert.

Ein eingehener Ruf wird zuerst an eine Gateway-Vermittlungsstelle G-LE, geleitet, die mit einem Sub-Dienststeuerungspunkt für Dienstlogik HSCPsl kommunizieren kann. Die Gateway-Vermittlungsstelle G-LE ist statisch mit einem gemeinsamen Erkennungspunkt für eine mobile Eintragsnummer ausgerüstet. Wenn die Gateway-Vermittlungsstelle G-LE erkennt, dass ein mobiles Engerät gerufen wird, wird in dem Sub-Dienststeuerungspunkt für Dienstlogik HSCPsl eine Prozedur *initial_detect* aufgerufen, um Informationen bereitzustellen, wie der Ruf behandelt werden soll.

Der Sub-Dienststeuerungspunkt für Dienstlogik HSCPsl ruft daraufhin eine Prozedur *send_rout_info* der Dienststeuerungsfunktionen für Mobilitätsmanagement HSCFmm eines Servers für Mobilitätsmanagement HSM auf, welche die Eintragsnummer umfaßt. Nachdem die Dienststeuerfunktionen für Mobilitätsmanagement HSCFmm des Servers für Mobilitätsmanagement HSM die Adresse der Dienststeuerungsfunktionen für Mobilitätsmanagement SCPmm erhalten haben, rufen die Dienststeuerungsfunktionen für Mobilitätsmanagement HSCFmm eine Prozedur *provide*_*roaming* #, die auch die IPUI umfaßt, in einem Sub-Dienststeuerungspunkt für Mobilitätsmanagement SCPmm auf.

Der Sub-Dienststeuerungspunkt für Mobilitätsmanagement SCPmm weist der IPUI eine Roaming-Nummer zu und gibt diese an die Dienststeuerungsfunktionen für Mobilitätsmanagement HSCFmm des Servers HSM über die Prozedur *roaming_#* zurück.

Die Dienststeuerungsfunktionen für Mobilitätsmanagement HSCFmm des Servers HSM leiten diese Information an den Sub-Dienststeuerungspunkt für Dienstlogik HSCPsl zurück.

Mittels einer Verbindungs-Nachricht, welche die Roaming-Nummer umfaßt, weist nun der Sub-Dienststeuerungspunkt für Dienstlogik HSCPsl die Gateway-Vermittlungsstelle G-LE an, den Ruf an die Vermittlungsstelle LE weiterzuleiten, in dessen Bereich sich das mobiles Engerät befindet.

Zu diesem Zweck wird das ISDN-User-Part (ISUP) oder ein ähnliches Signalisierungsprotokoll benutzt. Die Rufkontrollfunktion in der gesuchten Vermittlungsstelle detektiert dann, dass eine Roaming-Nummer übermittelt wurde, und fordert die Adresse der Basisstation BS bzw. des Zugangsnetzs AN sowie die Eintragsnummer von dem Sub-Dienststeuerungspunkt für Mobilitätsmanagement SCPmm mittels der Prozedur *get_AN*_*address* an.

Der Sub-Dienststeuerungspunkt für Mobilitätsmanagement SCPmm sendet die angeforderten Daten mittels der Nachricht *AN_address* an die Vermittlungsstelle LE zurück, so daß der Ruf an das mobile Endgerät PP weitergeleitet werden kann.

Insgesamt wird durch die erfindungsgemäße Anordnung und das erfindungsgemäße Verfahren ein Sub-Dienststeuerungspunkt für Dienstlogik wesentlich von Aufgaben des Mobilitätsmanagements in einem Telekommunikationsnetz entlastet. Ferner können bereits vorhandene Telekommunikationsnetze ohne großen Aufwand um die zusätzliche Funktionalität des Mobilitätsmangements erweitert werden, da insbesondere auf Standardkomponenten bzw. -funktionen aus Mobilfunknetzen wie GSM zurückgegriffen werden kann.

## Patentansprüche

1. Anordnung zum Mobilitätsmanagement in einem Telekommunikationsnetz (IN), wobei ein Dienststeuerungspunkt (1)
- mindestens einen Sub-Dienststeuerungspunkt (2; 10; 31) für Mobilitätsmanagement und
- mindestens einen ersten Sub-Dienststeuerungspunkt (3) für Dienstlogik aufweist,
**dadurch gekennzeichnet, dass**
mindestens ein Server (13; 34) für Mobilitätsmanagement vorgesehen ist, der dazu ausgebildet ist, Mobilitätsmanagement-funktionen auszuführen und hierzu mit dem oder den ersten Sub-Dienststeuerungspunkt(en) (10; 31) für Mobilitätsmanagement zu kommunizieren.

2. Anordnung nach Anspruch 1,
**dadurch gekennzeichnet, dass**
der Server (13; 34) für Mobilitätsmanagement zentrale Mobilitätsfunktionen (14, 15; 35, 36) aufweist, die in einer Plattform realisiert werden, die im wesentlichen von dem oder den ersten Sub-Dienststeuerungspunkt (3) für Dienstlogik unabhängig ist.

3. Anordnung nach Anspruch 1 oder 2,
**dadurch gekennzeichnet, dass**
der Server (13; 34) für Mobilitätsmanagement Funktionen einer GSM-Home-Location-Register/Authentifizierungs-Center-Plattform aufweist, die zur GSM-Dienststeuerung vorgesehen sind.

4. Anordnung nach einem der vorhergehenden Ansprüche,
**dadurch gekennzeichnet, dass**
der Server (13; 34) für Mobilitätsmanagement mindestens eine der folgenden Funktionalitäten in einem IN-basierten Telekommunikationsnetz zur Verfügung stellt:
- Prozeduren zum Laden von Netz-Zugangsdaten in ein mobiles Engerät über die Luftschnittstelle;
- Daten zur Chiffrierung einer Übertragung über die Luftschnittstelle zwischen einem mobilen Engerät und einer Basisstation;
- Prozeduren und Daten zur Identifizierung, Authentifizierung und Standortregistrierung eines mobilen Endgerätes;
- für jeden Teilnehmer im Telekommunikationsnetz Wartung der Adresse von Dienststeuerungsfunktionen (8; 11; 32) für das Mobilitätsmanagement, die aktuell die Teilnehmer bedienen.

5. Anordnung nach einem der vorhergehenden Ansprüche,
**dadurch gekennzeichnet, dass**
der Server (13; 34) für Mobilitätsmanagement und/oder der zweite Sub-Dienststeuerungspunkt (17; 38) für Dienstlogik dazu ausgebildet sind bzw. ist, Daten im Mobile-Application-Protokoll (MAP) auszutauschen.

6. Anordnung nach einem der vorhergehenden Ansprüche,
**dadurch gekennzeichnet, dass**
in einer lokalen Vermittlungsstelle (21; 30), die dem von einem mobilen Engerät besuchten Bereich zugeordnet ist, mindestens ein Detektierungspunkt vorgesehen ist, der dazu ausgebildet ist, der Vermittlungsstelle ein Handover der Dienststeuerung an eine in einem der zweiten Sub-Dienststeuerungspunkte (17; 38) für Dienstlogik enthaltene Funktion (18; 39) zu übergeben.

7. Anordnung nach Anspruch 6,
**dadurch gekennzeichnet, dass**
der Detektierungspunkt dynamisch in der Vermittlungsstelle (21; 30) dem mobilen Engerät zugeordnet wird.

8. Anordnung nach einem der vorhergehenden Ansprüche,
**dadurch gekennzeichnet, dass**
der Server (13; 34) für Mobilitätsmanagement eine Protokoll-Anpasseinrichtung (26) aufweist, die sowohl INAP- als auch MAP-Daten verarbeiten kann und mit einem Sub-Dienststeuerungsknoten (10) zum Mobilitätsmanagement verbindbar ist, um mit diesem Daten zum Mobilitätsmanagement auszutauschen.

9. Verfahren zum Mobilitätsmanagement in einem Telekommunikationsnetz (IN), wobei ein Dienststeuerungspunkt (1)
- mindestens einem Sub-Dienststeuerungspunkt (2; 10; 31) für Mobilitätsmanagement und
- mindestens einem ersten Sub-Dienststeuerungspunkt (3) für Dienstlogik aufweist,
**dadurch gekennzeichnet, dass**
mindestens ein Server (13; 34) für Mobilitätsmanagement vorgesehen ist, der Mobilitätsmanagementfunktionen ausführt und hierzu mit dem oder den ersten Sub-Dienststeuerungspunkt(en) (10; 31) für Mobilitätsmanagement kommuniziert.

10. Verwendung einer Anordnung nach einem der Ansprüche 1 bis 8 oder eines Verfahrens gemäß Anspruch 9 in einem Telekommunikations-Festnetz wie PSTN oder ISDN oder in einem Mobilfunknetz wie GSM.
